Europäisches Patentamt

European Patent Office

Office européen des brevets

(19)

(11) Veröffentlichungsnummer: **0 340 658**
**A2**

(12) **EUROPÄISCHE PATENTANMELDUNG**

(21) Anmeldenummer: 89107747.1

(22) Anmeldetag: 28.04.89

(51) Int. Cl.⁴: **F16L 1/02 , F16L 17/00**

(30) Priorität: 04.05.88 DE 3815141

(43) Veröffentlichungstag der Anmeldung:
08.11.89 Patentblatt 89/45

(84) Benannte Vertragsstaaten:
AT BE CH DE ES FR GB GR IT LI LU NL SE

(71) Anmelder: PHOENIX AKTIENGESELLSCHAFT
Hannoversche Strasse 88
D-2100 Hamburg 90(DE)

Anmelder: Wayss & Freytag
Aktiengesellschaft
Theodor-Heuss-Allee 110
D-6000 Frankfurt am Main 90(DE)

(72) Erfinder: Grosse, Volkmar, Dipl.-Ing.
Teutonenweg 137a
D-2000 Hamburg 61(DE)
Erfinder: Glang, Siegfried
Bredengrund 24a
D-2104 Hamburg 92(DE)

(54) Aktivierbare Dichtung für Vorpressrohre.

(57) Die Erfindung betrifft eine Dichtung für Vorpreßrohre. Das Wesentliche an dieser Erfindung besteht
darin, daß die Dichtung (3) aus Gummi oder gummiähnlichem Werkstoff beidseitig Rillennuten (4, 5) aufweist und mittels eines injizierbaren, das Gesamtvolumen vergrößernden Mediums aktivierbar ist, wobei
der für dieses Medium zunächst zur Verfügung stehende Hohlraum (7) im Vergleich zum Gesamtvolumen der Dichtung im nicht aktivierten Zustand klein
ist.

Fig. 1

EP 0 340 658 A2

## Aktivierbare Dichtung für Vorpreßrohre

Die der Erfindung zugrunde liegende Aufgabe besteht in der Weiterentwicklung der bisher eingesetzten Dichtungen für Vorpreßrohre, und zwar derart, daß zwecks Erzielung der Dichtwirkung ein Mindestanpreßdruck auf eine Dichtung aufgebracht werden kann, der dem Grundwasserdruck entspricht. Gelöst wird diese Aufgabe durch das Kennzeichen des Anspruchs 1.

Die möglichen Funktionen der erfindungsgemäßen Dichtung sind:

a) Die profilierte Dichtung aus Gummi oder gummiähnlichem Werkstoff kann die lastverteilende Wirkung der üblichen Holzeinlagen übernehmen.

b) Ein pneumatisch oder hydraulisch im Hohlraum aufgebrachter, dem Grundwasserdruck angepaßter Druck übernimmt die Dichtung während des Bauzustandes (Vortrieb).

c) Im Endzustand wird der Hohlraum bzw. die Hohlräume mit einem Material, das sein Volumen nicht verringert, so verpreßt, daß die profilierte Dichtung aus Gummi oder gummiähnlichem Werkstoff die für die Dichtwirkung gewünschte Zusammendrückung erfährt.

Die Erfindung wird im folgenden anhand von Ausführungsbeispielen unter Bezugnahme auf schematische Zeichnungen erläutert. Dabei zeigen die drei Figuren den Querschnitt zweier Vortriebsrohre, zwischen denen sich die erfindungsgemäße Dichtung befindet.

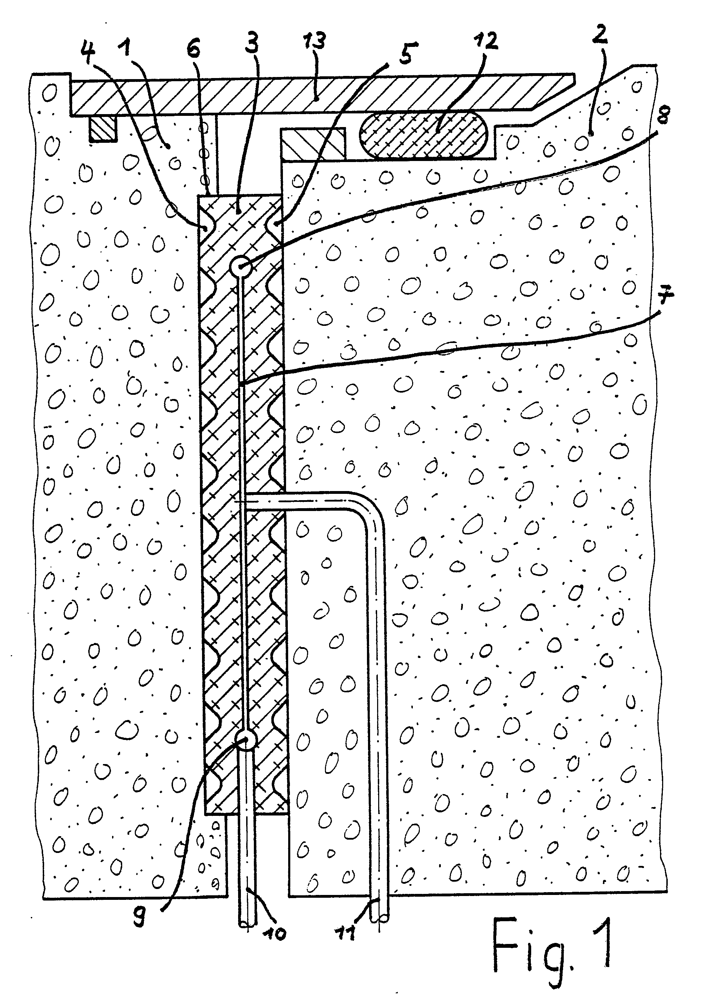

Nach der Fig. 1 befindet sich zwischen den beiden Vorpreßrohren (1, 2) aus Beton, Stahlbeton, Stahl oder Gußeisen, die beim Tunnelbau eingesetzt werden, die erfindungsgemäße Dichtung (3) aus Gummi oder gummiähnlichem Werkstoff, die beidseitig an ihrer Längsseite gleichförmige Rillennuten (4, 5) aufweist. Das Vorspreßrohr (1) besitzt hier eine Aussparung (6), in der die Dichtung verankert ist.

Im mittleren Bereich der Dichtung (3) befindet sich der aktivierbare Hohlraum (7), der endseitig in Form von Kanälen (8, 9) aufgeweitet ist. Der Injektionskanal (10, 11) ist in der Mitte bzw. an der Seite der Dichtung an den aktivierbaren Hohlraum (7) angeschlossen. Nach dem Zusammenfügen der angrenzenden Vorpreßrohre (1, 2) wird die Dichtung (3) mittels eines injizierbaren Mediums aktiviert. Auf diese Weise wird eine hohe Dichtwirkung erzielt, ohne daß ein Zusammenpressen der Dichtung wie bisher erforderlich wäre.

Bezüglich Rollring (12) und Stahlmanschette (13) wird auf den Stand der Technik verwiesen.

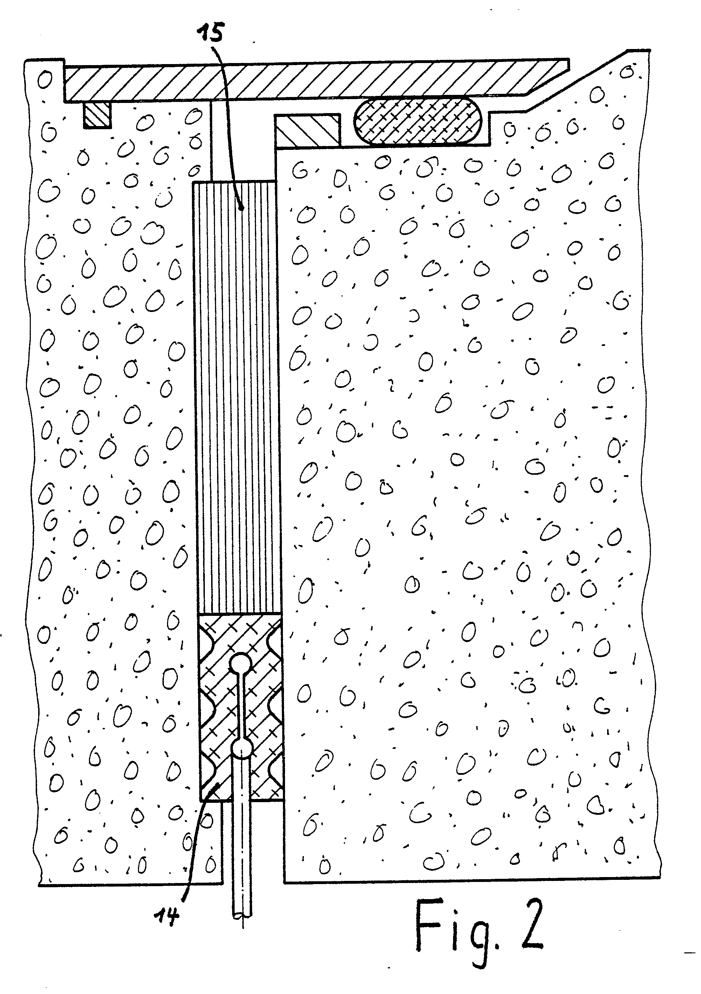

Nach Fig. 2 besteht das gesamte Dichtungssystem aus der aktivierbaren Dichtung (14) aus Gummi oder gummiähnlichem Werkstoff und dem Dichtungsteil (15) aus Holz oder anderem Material.

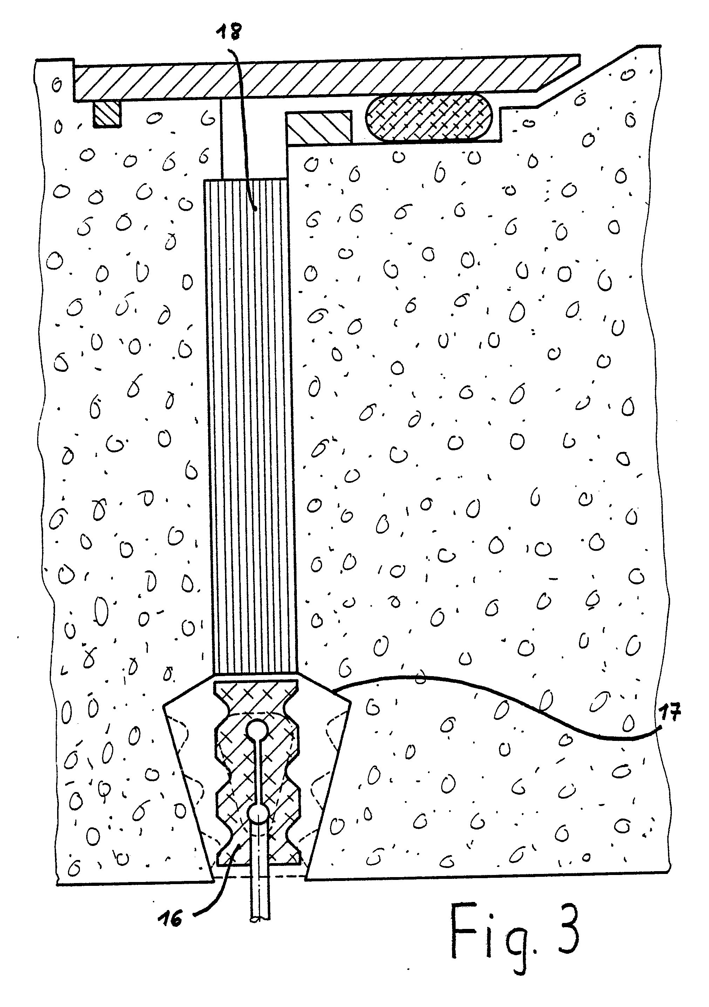

Nach Fig. 3 ist die erfindungsgemäße Dichtung (16) nachträglich in die Fuge (17) eingebaut worden. Der aktivierte Zustand der Dichtung (16) ist hier gestrichelt angedeutet. Das Dichtungssystem (18) besteht aus Holz oder einem anderen Werkstoff.

## Ansprüche

1) Dichtung für Vorpreßrohre, dadurch gekennzeichnet, daß die Dichtung (3, 14, 16) aus Gummi oder gummiähnlichem Werkstoff beidseitig Rillennuten (4, 5) aufweist und mittels eines injizierbaren, das Gesamtvolumen vergrößernden Mediums aktivierbar ist, wobei der für dieses Medium zunächst zur Verfügung stehende Hohlraum im Vergleich zum Gesamtvolumen der Dichtung im nicht aktivierten Zustand klein ist.

2) Dichtung nach Anspruch 1, dadurch gekennzeichnet, daß die Rillennuten bogen- oder sägezahnförmig ausgebildet sind.

3) Dichtung nach Anspruch 1 oder 2, dadurch gekennzeichnet, daß die Rillennuten im unbelasteten Zustand spiegelsymmetrisch zueinander angeordnet sind.

4) Dichtung nach einem der Ansprüche 1 bis 3, dadurch gekennzeichnet, daß sich auf jeder Seite (Längsseite) wenigstens drei umlaufende Rillennuten befinden.

5) Dichtung nach einem der Ansprüche 1 bis 4, dadurch gekennzeichnet, daß sich der aktivierbare Hohlraum als Einzel- oder Mehrkammersystem im mittleren Bereich der Dichtung längs der Rillennuten erstreckt und bezogen auf die Profildicke schmal ist.

6) Dichtung nach Anspruch 5, dadurch gekennzeichnet, daß der Hohlraum (7) endseitig in Form von Kanälen (8, 9) aufgeweitet ist.

7) Dichtung nach einem der Ansprüche 1 bis 6, dadurch gekennzeichnet, daß das Volumen des Hohlraumes bzw. der Hohlräume im nicht aktivierten Zustand gegen Null geht.

8) Dichtung nach einem der Ansprüche 1 bis 7, dadurch gekennzeichnet, daß der Injektionskanal (10, 11) in der Mitte und/oder an der Seite der Dichtung an den aktivierbaren Hohlraum angeschlossen ist.

9) Dichtung nach einem der Ansprüche 1 bis 8, dadurch gekennzeichnet, daß die Dichtung (14, 16) aus Gummi oder gummiähnlichem Werkstoff mit einem Dichtungssystem (15, 18) aus Holz oder anderen Werkstoffen kombiniert ist.

10) Dichtung nach Anspruch 9, dadurch gekennzeichnet, daß die aktivierbare Dichtung (16) nachträglich in die Fuge (17) eingesetzt wird.

11) Dichtung nach einem der Ansprüche 1 bis 10, dadurch gekennzeichnet, daß diese als Kreisring endlos hergestellt wird.

12) Dichtung nach einem der Ansprüche 1 bis 11, dadurch gekennzeichnet, daß diese auch zur Druckverteilung verwendbar ist.

Fig. 1

Fig. 2

18

17

16

Fig. 3